# EUROPEAN PATENT SPECIFICATION

(11) **EP 3 628 497 B1**
(45) Date of publication and mention of the grant of the patent: **17.01.2024**
(21) Application number: 19199119.9
(22) Date of filing: 24.09.2019
(51) Int. Cl.: B41J 2/175

(54) **INK CARTRIDGE**
TINTENPATRONE
CARTOUCHE D'ENCRE

(30) Priority: 28.09.2018 JP 2018184853
(43) Date of publication of application: 01.04.2020
(73) Proprietor: CANON KABUSHIKI KAISHA, Ohta-ku Tokyo 146-8501 (JP)
(72) Inventor: NAGAOKA, Kyosuke, Ohta-ku,, Tokyo 146-8501 (JP); KOTAKI, Yasuo, Ohta-ku,, Tokyo 146-8501 (JP); OHASHI, Tetsuya, Ohta-ku,, Tokyo 146-8501 (JP); INOUE, Ryoji, Ohta-ku,, Tokyo 146-8501 (JP); MIYASHITA, Takeho, Ohta-ku,, Tokyo 146-8501 (JP); MURAKAMI, Hironori, Ohta-ku,, Tokyo 146-8501 (JP); TANNO, Takayuki, Ohta-ku,, Tokyo 146-8501 (JP); FUKUSHIMA, Takashi, Ohta-ku,, Tokyo 146-8501 (JP)
(74) Representative: TBK

(56) References cited:
- EP-A2- 1 352 747
- JP-A- 2013 158 978
- US-A- 6 073 812
- US-A1- 2013 056 486

## Description

The present invention relates to an ink cartridge according to the preamble of claim 1.

### Description of the Related Art

An ink cartridge attachable to an inkjet printing apparatus may be provided with an air communication port in order to stabilize an internal pressure. However, evaporation of an ink is promoted in the case where the air communication port is provided, whereby a density and components of the ink may become unstable.

JP 2013-158978 A discloses an ink cartridge configured to seal an air communication port with a sealing member in the course of distribution and to allow a user to peel the sealing member off in the case of attaching the ink cartridge to an inkjet printing apparatus. The ink cartridge according to JP 2013-158978 A makes it possible to suppress evaporation of the ink in the course of distribution and to supply the ink stably while keeping an internal pressure at an atmospheric pressure after the attachment to the apparatus.

However, the ink cartridge disclosed in JP 2013-158978 A entrusts the user to peel the sealing member off and therefore has a risk of attachment to the apparatus without peeling the sealing member off. In this case, the internal pressure of the ink cartridge may vary with consumption of the ink and the ink may not be stably supplied to a printing head from the ink cartridge. As a consequence, there are a risk of a failure of the printing head to perform a normal ejection operation and a risk of a breakage of the printing head.

US 6 073 812 A shows a generic ink cartridge according to the preamble of claim 1, comprising a housing including an air communication port and configured to store a liquid inside; and a sealing member attached to the housing in such a way as to cover the air communication port, wherein the sealing member includes an adherent region attached to the housing and a non-adherent region not attached to the housing, and the non-adherent region extends to an end portion of the sealing member and forms a communication passage which establishes communication between the air communication port and air by classifying a part of a region in which the sealing member can contact the housing as the adherent region in a state of covering the air communication port with the sealing member. Another example is also given in US 2013/056486 A1.

### SUMMARY OF THE INVENTION

It is the object of the present invention to further develop an ink cartridge according to the preamble of claim 1 such that evaporation of an ink is stably suppressed and supply of the ink to a printing head is stabilized at the same time without placing a burden on a user such as peeling a sealing member off.

The object of the present invention is achieved by an ink cartridge having the features of claim 1.

Further advantageous developments according to the present invention are defined in the dependent claims.

Further features, advantages and effects of the present disclosure will become apparent from the following description of exemplary embodiments with reference to the attached drawings.

### BRIEF DESCRIPTION OF THE DRAWINGS

Fig. 1 is an internal configuration diagram of an inkjet printing apparatus used in a first embodiment;
Figs. 2A and 2B are external perspective views of an attachment unit;
Figs. 3A to 3D are diagrams of an ink cartridge viewed from various angles;
Fig. 4 is an enlarged cross-sectional view of a second case;
Figs. 5A and 5B are diagrams for explaining a structure of the ink cartridge;
Fig. 6 is a perspective view showing a portion in the vicinity of a bottom surface of the ink cartridge;
Figs. 7A to 7C are diagrams showing a bottom portion of a housing in a case where an ink is not supplied;
Figs. 8A to 8C are diagrams showing the bottom portion of the housing in a case where the ink is supplied;
Figs. 9A to 9D are diagrams for explaining a preferred example of dimensions of a bottom concave portion.
Figs. 10A to 10C are diagrams showing layout examples of an adherent region and a non-adherent region;
Fig. 11 is a table showing results of comparison on various validation examples;
Figs. 12A and 12B are diagrams showing layout examples of the adherent region and the non-adherent region;
Fig. 13 is a perspective view showing a portion in the vicinity of the bottom surface of the ink cartridge;
Fig. 14 is an internal configuration diagram of an inkjet printing apparatus used in a second embodiment;
Figs. 15A to 15C are diagrams showing an ink cartridge of the second embodiment; and
Figs. 16A and 16B are diagrams showing layout examples of an adherent region and a non-adherent region.

### DESCRIPTION OF THE EMBODIMENTS

### (First embodiment)

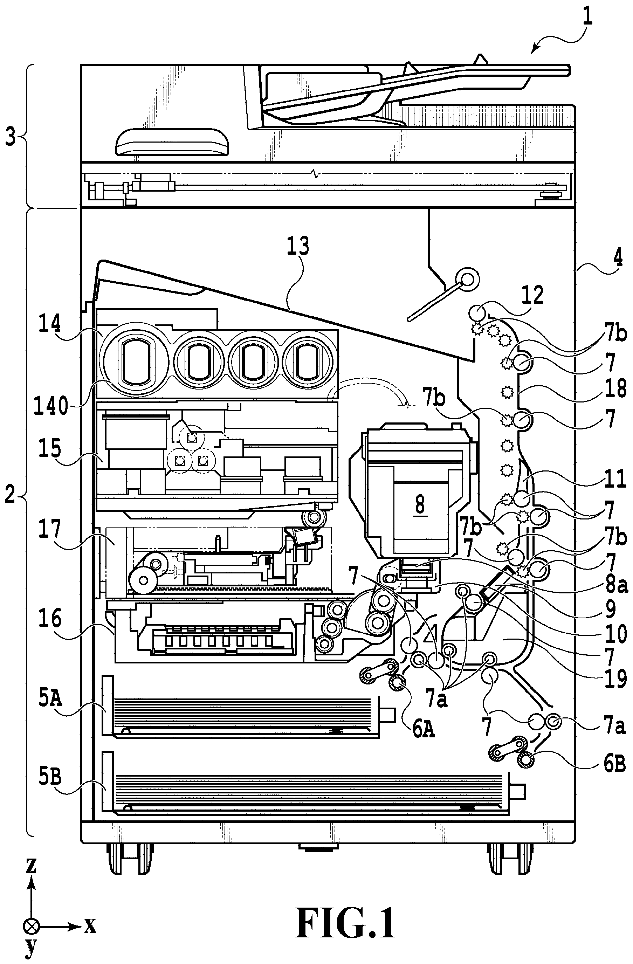

Fig. 1 is an internal configuration diagram of an inkjet printing apparatus 1 (hereinafter simply referred to as a printing apparatus 1) used in a first embodiment. The printing apparatus 1 is a multifunction peripheral that includes a printing unit 2 and a scanner unit 3 located above the printing unit 2. The printing unit 2 and the scanner unit 3 can independently or jointly execute a variety of processing concerning a printing operation and a reading operation. The scanner unit 3 includes an automatic document feeder (ADF) and a flat bed scanner (FBS), and is capable of reading an original document automatically fed by the ADF and reading (scanning) an original document placed on a platen of the FBS by a user. Although Fig. 1 shows the multifunction peripheral that includes both the printing unit 2 and the scanner unit 3, the scanner unit 3 may be excluded therefrom. Fig. 1 illustrates the printing apparatus 1 in a standby state of not executing the printing operation or the reading operation.

In the printing unit 2, a first cassette 5A and a second cassette 5B for storing print media (cut sheets) S are detachably installed at a bottom portion located below an apparatus housing 4 in a direction of gravitational force. Relatively small print media up to A4 size are stored in a vertically stacked manner in the first cassette 5A while relatively large print media up to A3 size are stored in a vertically stacked manner in the second cassette 5B. In the vicinity of the first cassette 5A, there is provided a first feed unit 6A for feeding the stored print media one by one separately. Likewise, a second feed unit 6B is provided in the vicinity of the second cassette 5B. In the case where a printing operation takes place, the print medium S is fed selectively from one of the cassettes.

Conveyance rollers 7, a discharge roller 12, pinch rollers 7a, pinions 7b, a guide 18, an inner guide 19, and a flapper 11 constitute a conveyance mechanism for guiding the print media S in a predetermined direction. The conveyance rollers 7 are driving rollers which are arranged on an upstream side and a downstream side of a printing head 8 and are driven by a not-illustrated conveyance motor. The pinch rollers 7a are driven rollers to be rotated while nipping the print media S in cooperation with the conveyance rollers 7. The discharge roller 12 is a driving roller arranged on a downstream side of the conveyance rollers 7 and is driven by the not-illustrated conveyance motor. The pinions 7b sandwich and convey the print media S in cooperation with the conveyance rollers 7 and the discharge roller 12 arranged on the downstream side of the printing head 8.

The guide 18 is provided on a conveyance path for the print media S and guides the print media S in a predetermined direction. The inner guide 19 has a curved side surface that extends in a y direction and guides the print media S along the side surface. The flapper 11 is configured to switch the direction of conveyance of each print medium S at the time of a duplex printing operation. A discharge tray 13 is a tray for stacking and holding the print media S discharged by the discharge roller 12 after completion of the printing operation.

The printing head 8 shown in Fig. 1 is a full line-type inkjet printing head in which multiple ejection ports that eject inks in accordance with printing data are arranged in the y direction as long as the width of the print media S. In addition, the above-mentioned ejection port arrays extending in the y direction are arranged so as to correspond to yellow, cyan, magenta, and black inks, respectively, in the printing head 8.

In the case where the printing head 8 is located at a standby position, an ejection port surface 8a of the printing head 8 is capped with a cap unit 10 as shown in Fig. 1. In the case where the printing operation takes place, an orientation of the printing head 8 is changed such that the ejection port surface 8a is opposed to a platen 9. The platen 9 is formed from a flat plate that extends in the y direction and supports the print media S subj ected to the printing operation with the printing head 8 from back surfaces of the print media S.

An ink tank unit 14 includes an attachment unit 140 for attaching ink cartridges 20. Each ink cartridge 20 attached to the attachment unit 140 can supply the ink stored inside to an ink supply unit 15. Although the attachment unit 140 may be fixed to the printing apparatus 1, the attachment unit 140 may be made detachable from the printing apparatus 1 instead. In this embodiment, the attachment unit 140 is capable of detachably attaching the ink cartridges 20 that store the cyan, yellow, magenta, and black inks, respectively.

The ink supply unit 15 is provided in the middle of a flow passage that connects the ink tank unit 14 to the printing head 8, and adjusts pressures and flow rates of the inks in the printing head 8 to appropriate ranges. This embodiment adopts a circulating type ink supply system and the ink supply unit 15 adjusts the pressures of the inks supplied to the printing head 8 and the flow rates of the inks collected from the printing head 8 to appropriate ranges.

A maintenance unit 16 includes the cap unit 10 and a wiping unit 17. The maintenance unit 16 operates these units at predetermined timings to perform a maintenance operation on the printing head 8.

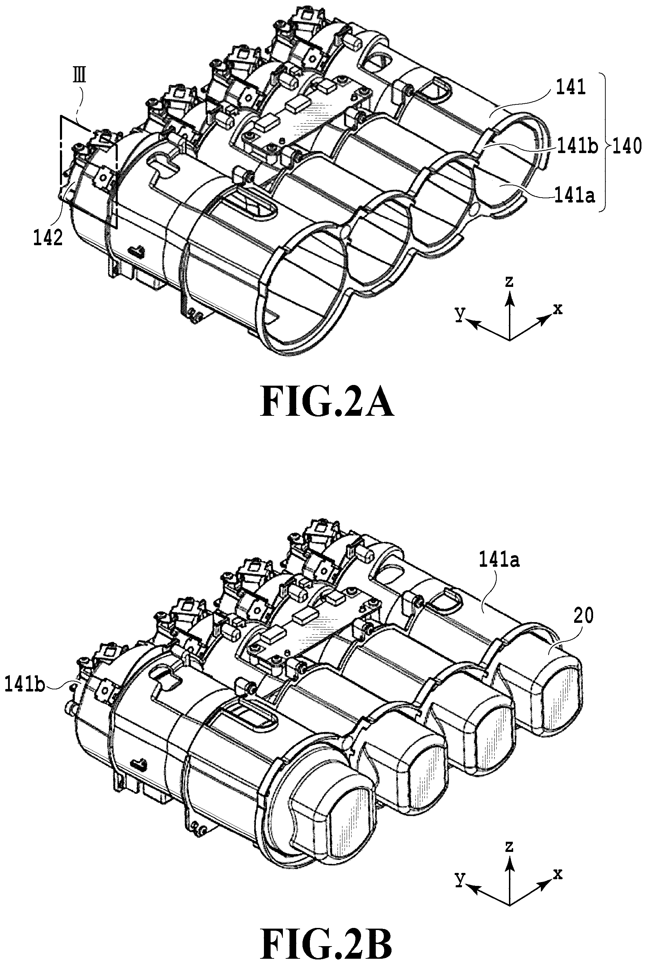

Figs. 2A and 2B are external perspective views of the attachment unit 140. Fig. 2A shows a state where the ink cartridges 20 are not attached and Fig. 2B shows a state where the ink cartridges 20 are attached.

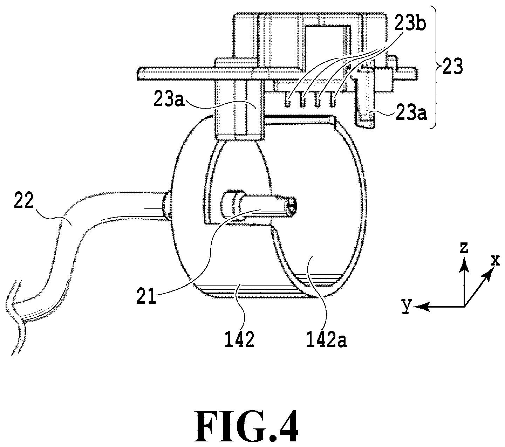

The attachment unit 140 includes first cases 141 each being formed of a substantially cylindrical shape and capable of inserting the ink cartridge 20, and second cases 142 each having a smaller diameter than that of the corresponding first case 141. The first cases 141 and the second cases 142 have spaces both taking on cylindrical shapes and being continuous inside. An ID recess 141b for loosely positioning each ink cartridge in the case is formed around an opening (a first opening) 141a of each first case 141. Meanwhile, although not illustrated in Figs. 2A and 2B, each second case 142 is provided with connecting pins 23b that are connectable to pad electrodes 27 provided to the ink cartridge 20 (see Fig. 4). In the case where the ink cartridge 20 is attached to the attachment unit 140, a user inserts the ink cartridge 20 in the y direction from the first opening 141a of the first case 141 such that a tip end of the ink cartridge 20 reaches a top end of the second case 142 or the neighborhood thereof.

The first opening 141a of the first case 141 does not have to be of an exact circle. Nonetheless, the diameter (a length corresponding to the diameter of a circle) of the first opening 141a is preferably in a range from 50 mm to 90 mm inclusive. Examples of a material forming the first case 141 include acrylonitrile butadiene styrene (ABS) copolymer resin, modified polyphenylene oxide (PPO), high impact polystyrene (HIPS) resin, and the like. Examples of a material forming the second case 142 include polypropylene (PP), modified polyphenylene oxide (PPO), and the like. Although this embodiment describes the first case 141 and the second case 142 as separate components, these components may be integrally formed instead.

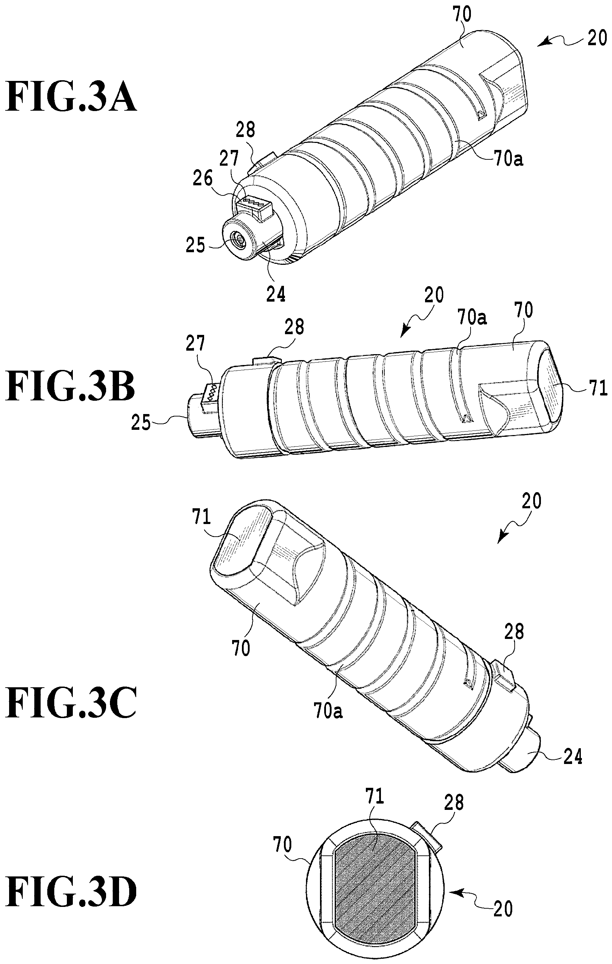

Figs. 3A to 3D are diagrams of the ink cartridge 20 viewed from various angles. The ink cartridge 20 includes a housing 70 formed substantially into a cylindrical shape and a joint unit 24 having a cylindrical shape smaller than the housing 70. In the state where the ink cartridge 20 is attached to the attachment unit 140, the housing 70 is mainly supported by the first case 141 while the joint unit 24 is mainly supported by the second case 142.

A groove 70a such as one in a screw is formed in an outer periphery of a side surface of the housing 70 in order to increase strength of the housing 70. The groove 70a may be formed from one continuous part or from two or more discontinuous parts. Meanwhile, an ID projection 28 that establishes a relation of engagement with the ID recess 141b on the first case 141 is provided on the outer periphery of the side surface of the housing 70. Moreover, a sealing member 71 is attached to a bottom portion of the housing 70. The sealing member 71 will be described in detail later.

In the meantime, a coupling unit 25 being an opening is provided at a tip end of the joint unit 24 and an electrode unit 26 in a convex shape is provided on a side surface of the joint unit 24. The pad electrodes 27 are arranged on a top surface of the convex portion of the electrode unit 26.

In this embodiment, the length of the housing 70 is preferably in a range from 190 mm to 220 mm inclusive. Meanwhile, the diameter of the housing 70 is preferably in a range from 50 mm to 80 mm inclusive. In this case, the diameter of the housing 70 may be changed depending on the color of the ink so as to change the amount of the ink storable in the ink cartridge 20 depending on the type of the ink. For example, if the diameter of the housing of the ink cartridge 20 for a black ink is set to 75 mm and the diameter of the housing of a color ink is set to 55 mm, it is possible to store a larger amount of the ink in the ink cartridge 20 for the black ink than the one for the color ink.

In the meantime, the length of the joint unit 24 is preferably in a range from 20 mm to 30 mm inclusive. The diameter of the joint unit 24 is preferably in a range from 20 mm to 30 mm inclusive. The diameter of the coupling unit 25 is preferably in a range from 2 mm to 5 mm inclusive. The dimensions of the joint unit 24 and the coupling unit 25 are preferably the same among the ink cartridges 20 for all the colors irrespective of the volumes thereof.

In this embodiment, examples of a material forming the electrode unit 26 include polyethylene (PE), polypropylene (PP), and the like. Examples of a material forming the pad electrodes 27 include Ni, Au, and the like. Examples of a material forming the ID projection 28 include polyethylene (PE), polypropylene (PP), and the like.

Fig. 4 is an enlarged cross-sectional view of the second case 142. An ink receiving pipe 21 projects from a bottom surface of the second case 142. In the case where the ink cartridge 20 is inserted in the y direction, the ink receiving pipe 21 is coupled with the coupling unit 25 of the ink cartridge 20. The ink receiving pipe 21 is linked with a tube 22 connected to the ink supply unit 15. As a consequence of coupling the ink receiving pipe 21 with the coupling unit 25, the ink stored in the ink cartridge 20 can be supplied to the ink supply unit 15.

In this embodiment, the diameter of the second case 142 is preferably in a range from 20 mm to 30 mm inclusive and smaller than that of the first opening 141a. An inner diameter of the ink receiving pipe 21 is preferably in a range from 2 mm to 5 mm inclusive or more preferably in a range from 3 mm to 4 mm inclusive. Examples of a material forming the ink receiving pipe 21 include stainless steel (SUS), modified polyphenylene oxide (PPO), and the like.

An electrical connection unit 23 is provided on a side surface of the second case 142. The electrical connection unit 23 includes two positioning units 23a, and the connecting pins 23b are arranged between these two positioning units 23a. In the case where the ink cartridge 20 is inserted in the y direction, the positioning units 23a come into contact with side surfaces of the electrode unit 26 of the ink cartridge 20 so as to position the ink cartridge 20. Due to this positioning, each connecting pin 23b and the corresponding pad electrode 27 of the ink cartridge 20 are electrically connected to each other. Note that the electrical connection unit 23 does not always have to be provided on the side surface of the second case 142. The electrical connection unit 23 may be detachable from the attachment unit 140.

In this embodiment, examples of a material forming the positioning units 23a include PPO, ABS, SUS, and the like. Examples of a material forming the connecting pins 23b include a copper alloy (plated with gold) and the like. In the electrical connection unit 23, a material forming portions other than the positioning units 23a and the connecting pins 23b include ABS, polycarbonate (PC), and the like.

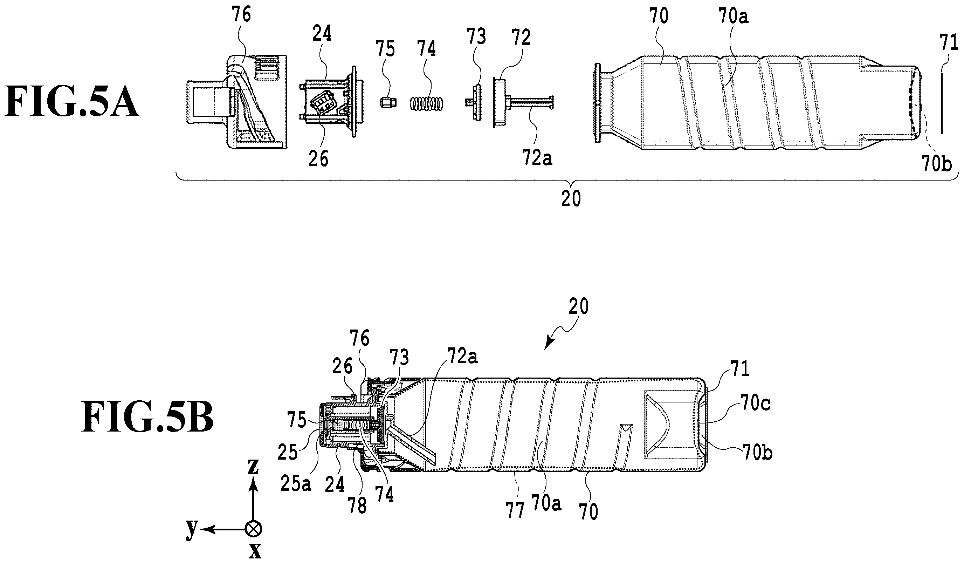

Figs. 5A and 5B are diagrams for explaining a structure of the ink cartridge 20. Fig. 5A is an exploded diagram of the ink cartridge 20 and Fig. 5B is a cross-sectional view of the ink cartridge 20 before being attached to a printing apparatus.

As shown in Fig. 5A, the ink cartridge 20 is formed by attaching a flow passage member 72, an air check valve 73, a spring 74, a supply port valve 75, the joint unit 24, and a cover member 76 in this order to an opening (the left side) of the housing 70. Meanwhile, the bottom portion (the right side) of the housing 70 is formed into a concave shape (hereinafter referred to as a bottom concave portion 70b) and the sealing member 71 is attached so as to cover this bottom concave portion 70b.

As shown in Fig. 5B, an inner bag 77 having an opening in common with the housing 70 is provided inside the housing 70 and the ink is stored in the inner bag 77. Here, the inner bag 77 is part of the housing 70. Accordingly, the housing 70 can also be regarded as a two-layered structure that includes an inner layer (the inner bag 77) and an outer layer. An air communication port 70c is formed in the bottom concave portion 70b and a space between the housing 70 and the inner bag 77 is kept at an atmospheric pressure in the case where the air communication port 70c is open. In light of introduction of the air and suppression of evaporation, the diameter of the air communication port 70c is preferably in a range from 0.1 mm to 10.0 mm inclusive or more preferably in a range from 0.5 mm to 5.0 mm inclusive. The inner bag 77 is low in rigidity and has flexibility. Accordingly, the inner bag 77 shrinks gradually along with consumption of the ink. On the other hand, the housing 70 (the outer layer) having relatively high rigidity retains the original shape irrespective of an amount of consumption of the ink.

The housing 70 and the inner bag 77 are preferably formed by injection blowing. Examples of a material forming the housing 70 include polyethylene terephthalate (PET), polybutylene terephthalate (PBT), and the like. Examples of a material forming the inner bag 77 include polyethylene (PE), polypropylene (PP), and the like.

The flexural modulus of the housing 70 is preferably equal to or above 300 MPa, more preferably equal to or above 800 MPa, or even more preferably equal to or above 1500 MPa. The flexural modulus of the inner bag 77 is preferably equal to or below 1000 MPa, more preferably equal to or below 500 MPa, or even more preferably equal to or below 300 MPa.

The flow passage member 72 includes a nozzle 72a for guiding the ink stored in the inner bag 77. The nozzle 72a is inclined in accordance with the gravitational force as shown in Fig. 5B so that a tip end of the nozzle 72a can reach the ink stored in the inner bag 77 easily even if the amount of the remaining ink is decreased.

In the case where the ink cartridge 20 is not attached to the attachment unit 140, the spring 74 biases the supply port valve 75 leftward and the air check valve 73 rightward as shown in Fig. 5B. The supply port valve 75 biased leftward by the spring 74 comes into contact with a seal 25a and blocks the coupling unit 25 (see Fig. 3A) of the joint unit 24 from inside. The air check valve 73 biased rightward in Fig. 5B blocks the opening of the housing 70 with the flow passage member 72, thus keeping the air from being mixed into the inner bag 77.

In a manufacturing process of the ink cartridge 20, the ink is injected into the inner bag 77, then the joint unit 24 is joined to the housing 70, and then the air is discharged from an air discharge hole 78 in the joint unit 24. Thereafter, the air discharge hole 78 is sealed with a film. Here, the air check valve 73 is installed so as not to cause the air to flow back into the inner bag 77 in a period between an air discharge process and a film welding process.

The joint unit 24 to which the flow passage member 72 is attached is joined to the inner bag 77 of the housing 70 in the state of housing the supply port valve 75, the spring 74, and the air check valve 73 inside the joint unit 24. The cover member 76 is a member for protecting the joint unit 24, and is attached in such a way as to cover the entire joint unit 24 and part of the housing 70. The cover member 76 is provided with a not-illustrated opening for exposing the coupling unit 25 of the joint unit 24. In the case where the ink cartridge 20 is attached to the attachment unit 140, the ink receiving pipe 21 (see Fig. 4) is inserted into the coupling unit 25 through this opening.

In the case where the ink receiving pipe 21 is inserted from the left side in Fig. 5B into the coupling unit 25, the supply port valve 75 moves in the right direction of Fig. 5B against the spring 74, whereby the seal 25a is detached from the coupling unit 25 and the coupling unit 25 is thus opened. In the case where the inside of the joint unit 24 is decompressed in this state, the air check valve 73 moves in the right direction against the bias of the spring 74, whereby the inside of the inner bag 77 is fluidically connected to the ink receiving pipe 21.

In this embodiment, examples of a material forming the flow passage member 72 include polyethylene (PE), polypropylene (PP), and the like. Examples of a material forming the air check valve 73 include polyethylene (PE), polypropylene (PP), and the like. Examples of a material forming the spring 74 include stainless steel (SUS) and the like. Examples of a material forming the seal 25a include rubbers, elastomers, and the like. Examples of a material forming the cover member 76 include PE, PP, acrylonitrile butadiene styrene (ABS) copolymer resin, and the like. The length of the cover member 76 is preferably in a range from 60 mm to 80 mm inclusive or more preferably in a range from 10 mm to 70 mm inclusive.

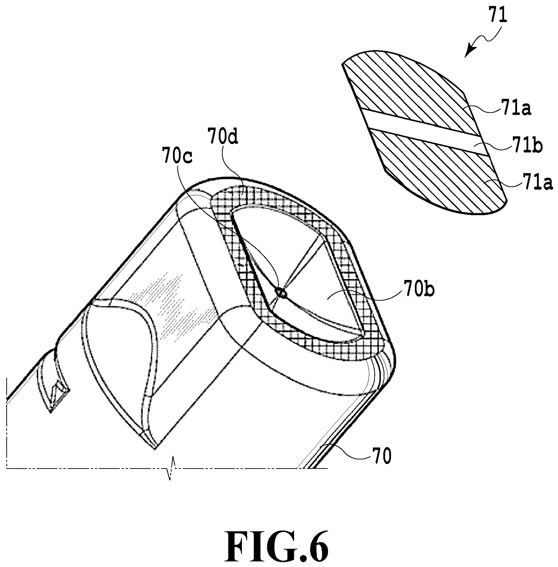

Fig. 6 is a perspective view showing a portion in the vicinity of a bottom surface of the ink cartridge 20. As described earlier, the housing 70 of the ink cartridge 20 includes the bottom concave portion 70b at the bottom portion. In this embodiment, the air communication port 70c is provided at the center of the bottom concave portion 70b. The sealing member 71 includes an adherent region 71a where an adhesive agent is applied and a non-adherent region 71b where the adhesive agent is not applied. The sealing member 71 is attached to a sealing member attachment region 70d located around the bottom concave portion 70b whereby the space in the bottom concave portion 70b is covered with the sealing member 71 serving as a lid. In this case, the non-adherent region 71b of the sealing member 71 is located immediately above the air communication port 70c.

The ink cartridge 20 manufactured as described above is put into distribution in the state where the sealing member 71 is attached thereto. Then, a user attaches the ink cartridge 20 to the attachment unit 140 (see Figs. 2A and 2B) of the printing apparatus 1 without peeling the sealing member 71 off the ink cartridge 20.

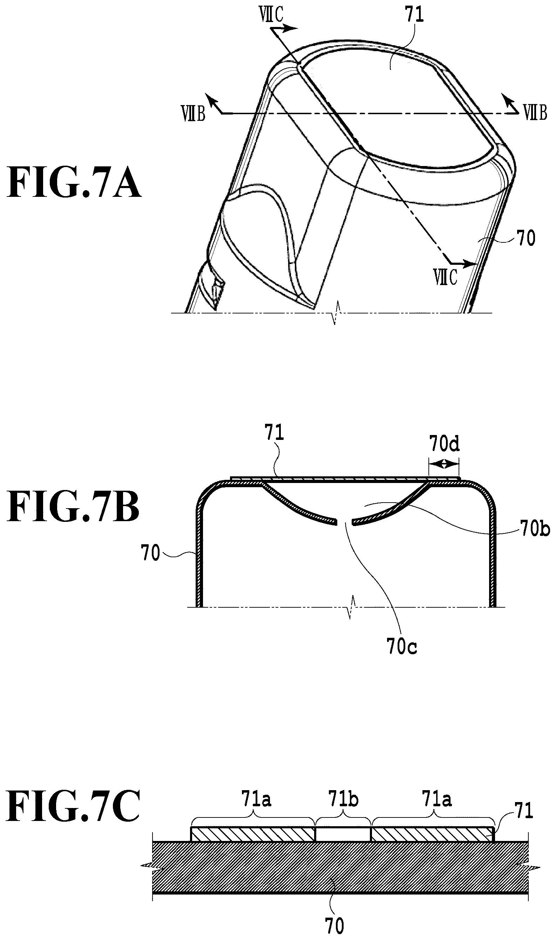

Figs. 7A to 7C are diagrams showing the bottom portion of housing 70 in the case where the ink is not supplied from the ink cartridge 20. Fig. 7A is an external perspective view. Fig. 7B is a cross-sectional view taken along the non-adherent region 71b of the sealing member 71 so as to pass through the air communication port 70c. Fig. 7C is a cross-sectional view in the sealing member attachment region 70d.

In the case where the ink is not supplied, the space in the bottom concave portion 70b is kept at the atmospheric pressure and the sealing member 71 is kept flat and smooth as shown in Figs. 7B and 7C. For this reason, the space defined by the sealing member 71 and the bottom concave portion 70b is blocked whereby evaporation of the ink through the air communication port 70c is suppressed.

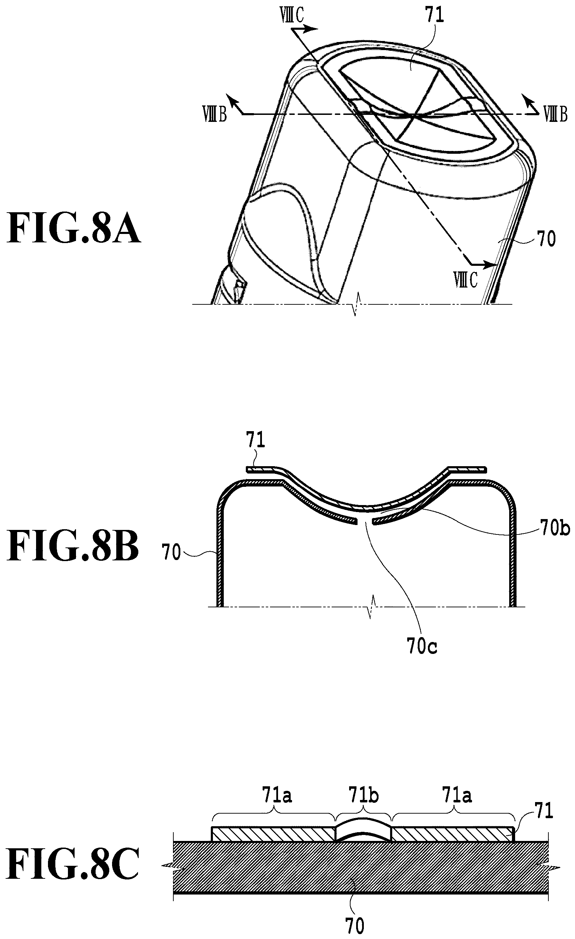

Figs. 8A to 8C are diagrams showing the bottom portion of the housing 70 in a case where the ink is supplied from the ink cartridge 20 to the ink supply unit 15 (see Fig. 1). Figs. 8A to 8C illustrate the bottom portion as with Figs. 7A to 7C. In the case where the ink is supplied, the inside of the housing 70 is decompressed due to the shrinkage of the inner bag 77. Accordingly, the space in the bottom concave portion 70b has a negative pressure through the air communication port 70c whereby the sealing member 71 located above the bottom concave portion 70b is recessed toward the air communication port 70c as shown in Fig. 8B. On the other hand, in the sealing member attachment region 70d, the non-adherent region 71b not attached to the housing 70 is embossed due to a reactive force as shown in Fig. 7C. As a consequence, a communication passage for establishing communication of the air with the air communication port 70c is defined between the non-adherent region 71b and the housing 70 and the air is guided to the bottom concave portion 70b which is in the decompressed state. Then, in the case where the supply of the ink is completed and the space in the bottom concave portion 70b reaches the atmospheric pressure, the sealing member 71 goes back to the flat and smooth state again as shown in Figs. 7A to 7C.

The above-mentioned guide of the air into the housing 70 is effectively achieved by the presence of the bottom concave portion 70b, because the presence of the bottom concave portion 70b increases an amount of displacement of the sealing member 71 and the reactive force of the sealing member 71 in the non-adherent region 71b is increased as well. As described above, this embodiment can achieve both an effect of suppressing evaporation of the ink and an effect of stably supplying the ink at the same time by covering the entire bottom concave portion 70b inclusive of the air communication port 70c with the sealing member 71 provided with the non-adherent region 71b.

In the above description, the region in the sealing member 71 provided with the adhesive agent is defined as the adherent region 71a while the region therein not provided with the adhesive agent is defined as the non-adherent region 71b. However, the adherent region 71a and the non-adherent region 71b are not necessarily defined by the presence of the adhesive agent or adhesiveness. For example, even if the adhesive agent is applied to the entire surface of the sealing member 71, there may still be a portion which does not adhere to the housing due to the thickness of the adhesive agent (an adhesive layer). For instance, a portion having a relatively small thickness of the adhesive agent has the adhesive agent and adhesiveness but does not adhere to the housing. On the other hand, there may also be a case in which a portion has an adhesive agent but does not possess adhesiveness due to hardening of the adhesive agent caused by light irradiation or the like. Such a portion does not adhere to the housing either. In other words, of the entire region of the sealing member 71, the adherent region 71a is the region that adheres to the housing while the non-adherent region 71b is the region that does not adhere to the housing.

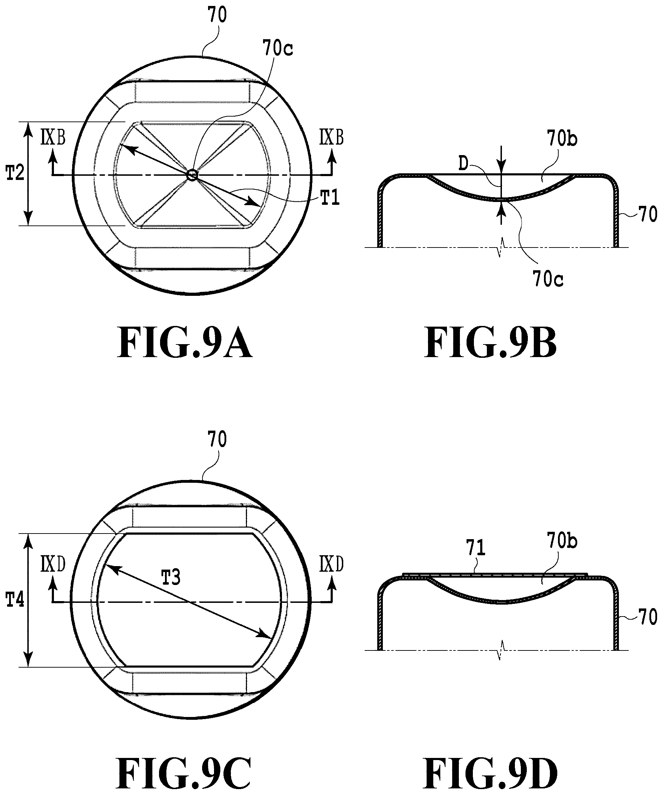

Figs. 9A to 9D are diagrams for explaining a preferred example of dimensions of bottom concave portion 70b. Fig. 9A is a plan view and Fig. 9B is a cross-sectional view of the bottom portion of the housing 70 before the sealing member 71 is attached thereto. On the other hand, Fig. 9C is a plan view and Fig. 9D is a cross-sectional view of the bottom portion of the housing 70 after the sealing member 71 is attached thereto.

The shape of the bottom concave portion 70b may be a curved shape or a shape that includes a flat surface. A depth D of the bottom concave portion 70b is preferably equal to or above 0.5 mm or more preferably equal to or above 2.0 mm from the viewpoint of an ink supply performance.

The bottom concave portion 70b of this embodiment has a shape of a part of a circle having a diameter T1 = φ 35 mm. Here, a dimension in a short side direction of the bottom concave portion 70b is set to T3 = 25 mm and the depth thereof is set to D = 6 mm. The air communication port 70c has a diameter of φ 2.5 mm and is located at the center and the deepest position of the bottom concave portion 70b. The sealing member 71 is in an almost scaling relationship with the bottom concave portion 70b, and the diameter of the sealing member 71 is set to T3 = φ 45 mm and a dimension in a short side direction thereof is set to T4 = 35 mm.

In order to increase the ink supply performance, the sealing member 71 needs to be flexibly deformable along with the decompression inside the housing 70. In this regard, a width of the sealing member attachment region 70d (a width T2 in the vicinity of the non-adherent region 71b in particular) is preferably equal to or below 20 mm or more preferably equal to or below 10 mm.

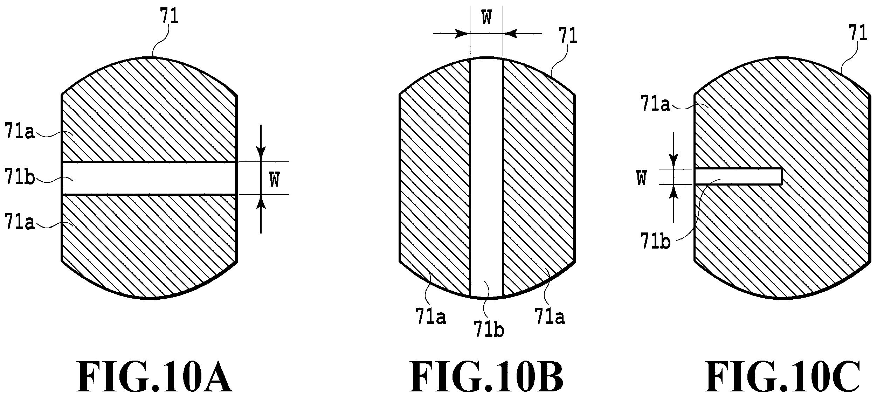

Figs. 10A to 10C are diagrams showing layout examples of the adherent region 71a and the non-adherent region 71b in the sealing member 71 applicable to this embodiment. Fig. 10A shows an example in which the non-adherent region 71b extends in the short side direction of the sealing member 71. This example corresponds to the layout shown in Fig. 6.

Fig. 10B shows an example in which the non-adherent region 71b extends in a long side direction of the sealing member 71. Fig. 10C shows an example in which the non-adherent region 71b extends in the short side direction from the center to one side of the sealing member 71. In any of these cases, the non-adherent region 71b is provided at the center position where the air communication port 70c is located.

In the following, specific examples of the sealing member suitably applicable to this embodiment will be described. In general, the sealing member 71 is formed at least from the adhesive layer and a base member and is used in such a way to attach the portion of the adhesive layer to the ink cartridge 20. A base member portion may be subjected to a printing process or a surface treatment such as lamination as needed.

The base member of the sealing member can be selected from various materials while taking into account its printing properties and the like. Any of paper, synthetic paper, a plastic film, a metal foil, and a laminated body thereof can be used as the base member, for example. Examples of the paper include water-resistant paper such as art paper and coated paper, Japanese traditional paper, and the like. Examples of the synthetic paper include void-containing synthetic paper, synthetic paper according to an internal paper manufacturing method, synthetic paper according to a surface coating method, synthetic paper according to a spun-bonding method, and the like.

Examples of the plastic film include polyolefin films such as a polypropylene film and a polyethylene film, and polyester films such as a polyethylene terephthalate film. Alternatively, the plastic film may be a foamed plastic film such as a foamed polystyrene film, a foamed polyester film, and a foamed polyolefin film. The plastic film may be any one of a stretched film (a uniaxial stretched film or a biaxial stretched film) and a non-stretched film. Meanwhile, the plastic film may be any one of transparent, translucent, and opaque films. Examples of the metal foil include an aluminum metal foil and the like.

Although the thickness of the base member can be appropriately selected from a range that does not spoil handleability, workability, and the like, it is suitable to select the thickness in a range from 20 µm to 200 µm inclusive in general. The base member may be formed from a single layer or multiple layers. Here, in order to improve the printing properties, a surface of the base member on a printing layer side may be subjected to a conventional surface treatment such as a corona discharge treatment, a plasma treatment, a flame treatment, and an acid treatment.

The adhesive layer for use in the sealing member can be appropriately selected while taking into account its adhesiveness to the housing 70 or to the base member. For example, it is possible to use any of acrylic-based adhesive agents, silicone-based adhesive agents, urethane-based adhesive agents, rubber-based adhesive agents, and the like. An acrylic-based adhesive agent is suitable in light of ease of controlling its adhesive physical properties by selecting a monomer type and controlling a molecular weight, a crosslink density and the like of a polymer, excellence in heat resistance and weather resistance, and a wide range of adhesive power that enables the design in a wide range from a weak adhesive type to a strong adhesive type, and so forth. A base polymer of such an acrylic-based adhesive agent adopts an acrylic-based copolymer obtained by polymerizing an acrylic monomer while adding a cross-linking agent (such as isocyanate and epoxy) thereto. Any of alkyl acrylate or alkyl methacrylate (hereinafter collectively referred to as acryl (meth)acrylate) with a carbon number in a range from 1 to 20 is used as a monomer component. Such an alkyl base may have either a straight chain or a branched chain. To be more precise, examples of the monomer component include methyl (meth)acrylate, ethyl (meth)acrylate, n-propyl (meth)acrylate, isobutyl (meth)acrylate, and t-butyl (meth)acrylate. More examples thereof include pentyl (meth)acrylate, isopentyl (meth)acrylate, hexyl (meth)acrylate, heptyl (meth)acrylate, n-octyl (meth)acrylate, and isooctyl (meth)acrylate. More examples thereof include 2-ethylhexyl (meth)acrylate, nonyl (meth)acrylate, isononyl (meth)acrylate, decyl (meth)acrylate, isodecyl (meth)acrylate, undecyl (meth)acrylate, and dodecyl (meth)acrylate. More examples thereof include tridecyl (meth)acrylate, tetradecyl (meth)acrylate, pentadecyl (meth)acrylate, hexadecyl (meth)acrylate, heptadecyl (meth)acrylate, and octadecyl (meth)acrylate. More examples thereof include nonadecyl (meth)acrylate, icosyl (meth)acrylate, and the like. Among them, alkyl (meth)acrylate having the carbon number in the range from 2 to 10 is used more preferably. Methods of synthesizing acrylic polymers include solution polymerization, emulsion polymerization, UV polymerization, and the like. An appropriate method can be selected therefrom. One or more additives out of a tackifying agent, a softening agent, a bulking agent, an antioxidant agent, a heat stabilizing agent, a light stabilizing agent, an antistatic agent, a fire retardant agent, a blowing agent, a coloring agent, a dyeing agent, and the like may be added to the acrylic-based adhesive agent as appropriate.

A primer layer may be provided between the base member and the adhesive layer. If the primer is used on a surface of any of base members having low surface energy that may complicate adhesion of the adhesive agent, surface tension of such a base member is increased so that the adhesion between the base member and the adhesive agent can be strengthened as a consequence.

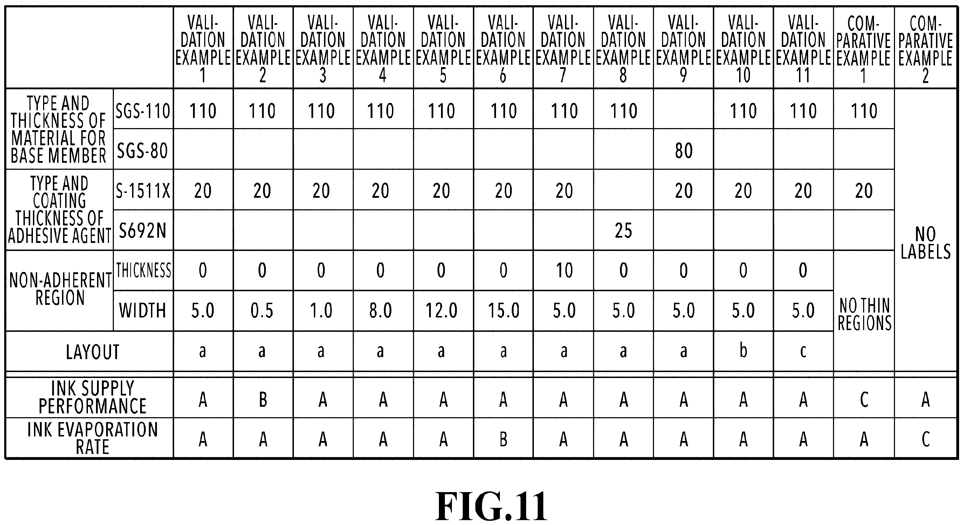

Fig. 11 is a table showing results of comparison of "ink supply performances" and "ink evaporation rates" in a case of attaching various sealing members 71 of different types to the ink cartridge 20. Here, a thickness of the base member of the sealing member 71, a coating thickness of the adhesive agent in the adherent region 71a, a coating thickness of the adhesive agent in the non-adherent region 71b, a width W of the non-adherent region 71b, and a layout of the adherent region 71a and the non-adherent region 71b are varied. Moreover, these cases are represented as validation examples 1 to 11. In the meantime, a case of not providing the sealing member 71 with the non-adherent region 71b and a case of not attaching the sealing member 71 to the ink cartridge 20 are also represented as comparative examples 1 and 2, respectively.

In the table, a remark SGS-110 in the row of the base member indicates the use of PP synthetic paper SGS-110 (manufactured by Yupo Corporation), and a remark SGS-80 in the row of the base member indicates the use of PP synthetic paper SGS-80 (manufactured by Yupo Corporation). A remark S-1511X in the row of the adhesive agent indicates the use of the acrylic-based adhesive agent S-1511X (manufactured by Toagosei Co., Ltd.) as the adhesive agent. Meanwhile, a remark S692N therein indicates the use of the acrylic-based adhesive agent S692N (manufactured by Avery Dennison Corporation) as the adhesive agent.

In the dimensions of the respective examples, the thickness is expressed in micrometers while the width is expressed in millimeters. Moreover, remarks a, b, and c in the row of the layout correspond to the layouts shown in Figs. 10A, 10B, and 10C, respectively.

The ink cartridges 20 of the same type were used in these validation examples. The material of the housing 70 was PET while the material of the inner bag 77 was PE. The diameter of the substantially cylindrical housing 70 was set to 57 mm, the height thereof was set to 200 mm, and the thickness thereof was set to 0.5 mm. The thickness of the inner bag 77 was set to 0.1 mm. The ink in an amount of 400 g was injected into the inner bag 77. Then, the "ink supply performance" and the "ink evaporation rate" were evaluated for each example.

The "ink supply performance" was evaluated based on benchmarks of A to C by inserting the ink receiving pipe 21 into the coupling unit 25 of the ink cartridge 20 and sucking out the ink in the ink cartridge 20 at a pressure of -40 kPa. Details of the evaluation benchmarks A to C for the "ink supply performance" are shown below.
A: The ink in the ink cartridge was successfully depleted at a rate of 15 g or above per 20 s.
B: The ink in the ink cartridge was successfully depleted at a rate in a range of not less than 5 g but not more than 15 g per 20 s.
C: The ink in the ink cartridge was depleted at a rate below 5 g per 20 s or the ink was not successfully depleted.

The "ink evaporation rate" was evaluated based on benchmarks of A to C by measuring an amount of evaporation of the ink after leaving the ink cartridge 20 to stand in a constant-temperature bath at 60 °C for two weeks. Details of the evaluation benchmarks A to C for the "ink evaporation rate" are shown below.
A: The evaporation rate was below 1.1 times as large as an evaporation rate of an ink cartridge not provided with an air communication port.
B: The evaporation rate was equal to or more than 1.1 times but less than 1.5 times as large as the evaporation rate of the ink cartridge not provided with the air communication port.
C: The evaporation rate was equal to or more than 1.5 times as large as the evaporation rate of the ink cartridge not provided with the air communication port.

Each of the validation examples 1 to 11 gains evaluations ofB or higher regarding the "ink supply performance" and the "ink evaporation rate". On the other hand, in the comparative example 1 where the non-adherent region 71b is not provided on the sealing member 71, the evaluation of the "ink supply performance" results in C because the air communication passage is not formed at the time of supplying the ink. On the other hand, in the comparative example 2 where the sealing member is not attached to the ink cartridge, the evaporation of the ink is accelerated because the air communication port 70c is constantly exposed to the air. Hence, the evaluation of the "ink evaporation rate" results in C.

In other words, each of the validation examples 1 to 11 adopting this embodiment can achieve an effect of suppressing evaporation of the ink and an effect of stably supplying the ink at the same time in contrast to the comparative examples with the "ink supply performance" or the "ink evaporation rate" evaluated as C.

Here, as a consequence of comparison among the validation examples 1 to 6, it turns out that the width W of the non-adherent region 71b is preferably equal to or above 1.0 mm and more preferably equal to or below 12.0 mm. Meanwhile, as a consequence of comparison among the validation examples 7 to 9, it is confirmed that the effects of this embodiment are achieved even if the type and the coating thickness of the adhesive agent in the adherent region 71a as well as the type and the thickness of the base member are varied to some extent. Moreover, as a consequence of comparison between the validation examples 10 and 11, it is confirmed that the effects of this example are achieved even if the layout of the adherent region 71a and the non-adherent region 71b is varied in accordance with Figs. 10A to 10C.

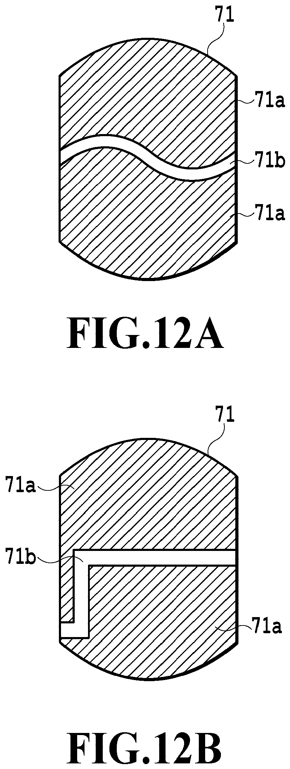

Figs. 12A and 12B are diagrams showing more modified examples of the layout of the adherent region 71a and the non-adherent region 71b in the sealing member 71. The non-adherent region 71b may extend in a curved shape as shown in Fig. 12A or extend in a crank shape as shown in Fig. 12B. Meanwhile, the width W of the non-adherent region 71b may vary in the direction of extension.

Moreover, although it is not illustrated in the drawings, two or more non-adherent regions 71b may be provided on one sealing member. However, in consideration of the effect of suppressing the evaporation, positions where the non-adherent regions 71b can communicate with the air are preferably not more than two positions. According to an investigation conducted by the inventors involved in this disclosure, the width W of each non-adherent region 71b is preferably equal to or above 0.1 mm, or more preferably equal to or above 0.5 mm, or even more preferably equal to or above 1.0 mm from the viewpoint of securing the ink supply performance. The width W is preferably equal to or below 15.0 mm or more preferably equal to or below 12.0 mm from the viewpoint of suppressing the ink evaporation rate.

In any case, it is possible to achieve both the effect of suppressing the evaporation of the ink and the effect of stably supplying the ink at the same time by causing at least one end of the of the non-adherent region 71b to extend to an end portion of the sealing member 71 and locating the air communication port 70c at a position included in the non-adherent region 71b.

The coating thickness of the adhesive agent in the adherent region 71a is preferably equal to or above 1 µm and more preferably equal to or above 5 µm so as to sufficiently displace the non-adherent region 71b at the time of supplying the ink. Although the upper limit of the coating thickness is not limited to a particular thickness, the coating thickness is equal to or below 150 µm in general.

A method of manufacturing the sealing member 71 is not limited to a particular method. However, there is a method of subjecting only the portion corresponding to the adherent region 71a to an adhesive treatment by using screen printing, for example, in order to precisely layout the adherent region 71a and the non-adherent region 71b. In the meantime, there are also other methods including a method of coating the adhesive agent on the entire surface of release paper and then partially scraping the adhesive agent off with a scraper or the like, a method of transferring a patterned adhesive layer formed on a roller, a method of partially removing the adhesive power by partially coating a varnish or the like on the adhesive layer, and so forth.

The shape of the sealing member 71 can be changed into various shapes in accordance with the shape of the housing 70. For example, the sealing member 71 may be of a circular shape, a rectangular shape, or a shape that combines the circular shape and the rectangular shape. Meanwhile, the size of the sealing member 71 is not limited. Nonetheless, in order to achieve the effect of suppressing the evaporation while covering the air communication port 70c, the size of a short side (a minor axis) of the sealing member 71 is preferably equal to or above 5 mm or more preferably equal to or above 10 mm.

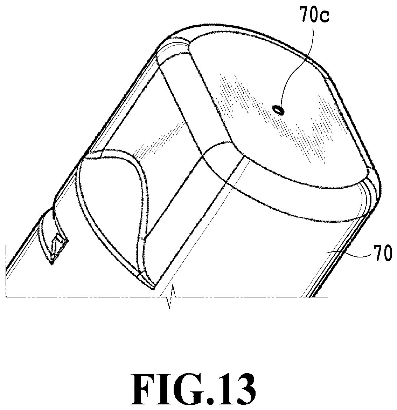

Note that the bottom concave portion 70b of the housing 70 is not an essential configuration in this embodiment. As shown in Fig. 13, the bottom portion of the housing 70 may be formed into a flat surface and the air communication port 70c may be provided in the flat surface. What is more, the air communication port 70c does not always have to be provided at a bottom portion of the housing 70 and may be provided on a side surface of the housing 70, for example.

In any case, the communication passage for establishing the communication of the air at the time of supplying the ink can be formed by attaching the sealing member 71 such that the non-adherent region 71b extending to the end portion of the sealing member 71 covers the air communication port 70c. In other words, the aspect of attaching the sealing member 71 to the ink cartridge 20 can achieve the effect of suppressing the evaporation of the ink and the effect of stably supplying the ink at the same time.

Furthermore, the shape of the ink cartridge 20 is not limited to the shape shown in Fig. 3. For example, the joint unit 24 and the housing 70 may be formed from cylinders of the same thickness (the same diameter). Meanwhile, the housing 70 may be formed into the shape of a polygonal column such as a triangular prism and a quadrangular prism, or formed into the shape of a circular cone. Alternatively, the housing 70 may be formed into the shape of a polygonal pyramid such as a triangular pyramid and a quadrangular pyramid.

### (Second embodiment)

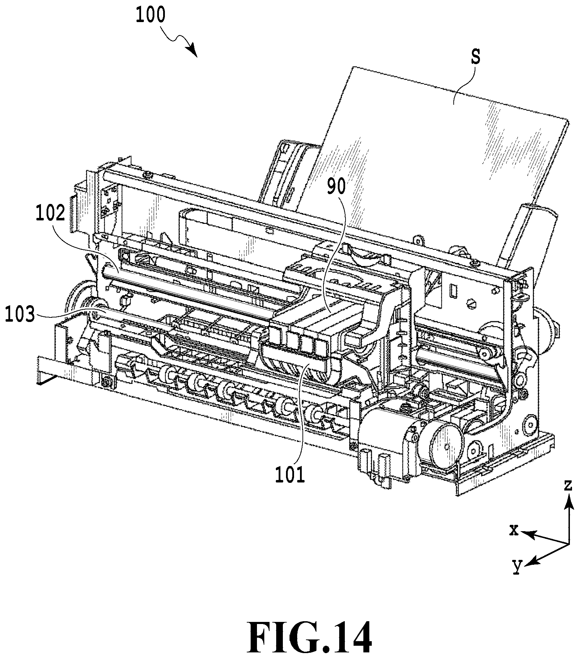

Fig. 14 is an internal configuration diagram of an inkjet printing apparatus 100 used in a second embodiment. An x direction indicates a direction of movement (a horizontal direction) of a carriage 101, a y direction indicates a direction of conveyance of the print medium S, and a z direction indicates a vertical direction, respectively.

The inkjet printing apparatus 100 of this embodiment is a serial-type inkjet printing apparatus in which a not-illustrated recording head and ink cartridges 90 for supplying inks to this printing head are mounted on the carriage 101. In this embodiment, the four ink cartridges 90 storing cyan, yellow, magenta, and black inks, respectively, are detachably mounted on the carriage 101.

The carriage 101 is movable in the ±x directions by using a guide shaft 102. As the printing head ejects the inks in the -z direction in accordance with printing data in the process of movement of the carriage 101 in the ±x directions, an image for one band is printed on the print medium S. After the aforementioned print scanning for one session is performed, a conveyance roller 103 is rotated so as to convey the print medium S for a distance corresponding to one band in the y direction crossing the print scanning direction. The image is formed stepwise on the print medium S by alternately repeating the print scanning and the conveyance operation as described above.

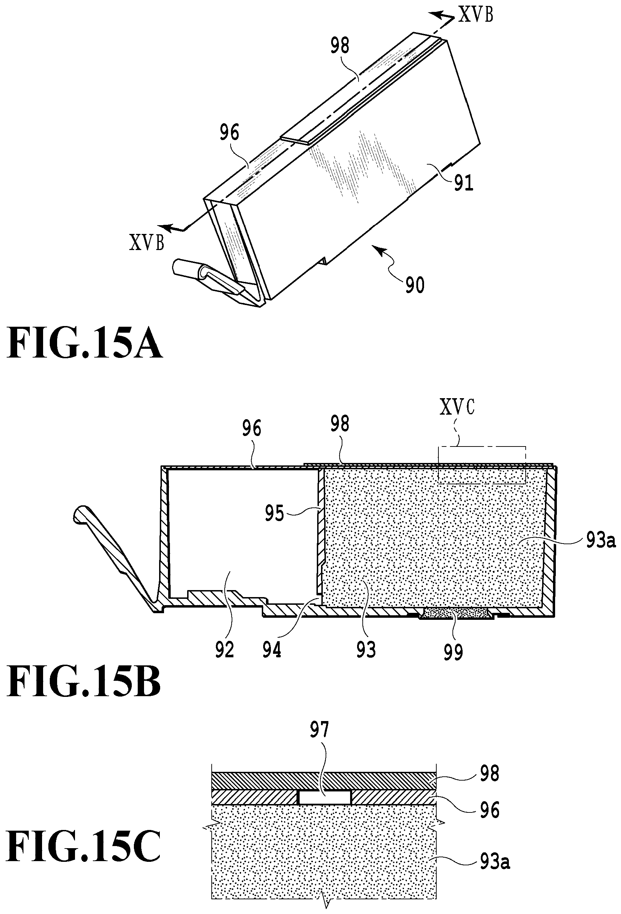

Figs. 15A to 15C are diagrams showing the ink cartridge 90 of this embodiment. Fig. 15A is a perspective view of the ink cartridge 90, Fig. 15B is a cross-sectional view thereof, and Fig. 15C is an enlarged view in the vicinity of an air communication port 97. The ink cartridge 20 includes a housing 91 that takes on a substantially rectangular parallelepiped shape, and a cover member 96 is fitted to an upper surface of the housing 91. The cover member 96 is provided with a partition plate 95 that extends to a bottom surface of the housing 91, and partitions the inside of the housing 91 into a liquid storage chamber 92 and a negative pressure generation member storage chamber 93.

A liquid (the ink) is stored in the liquid storage chamber 92 while the negative pressure generation member storage chamber 93 is filled with a negative pressure generation member 93a such as sponge. A tip end of the partition plate 95 does not reach the bottom surface of the housing 91 and a communication unit 94 that establishes communication between the liquid storage chamber 92 and the negative pressure generation member storage chamber 93 is thus formed. A supply port 99 for supplying the ink to the externally connected printing head is formed at a bottom part of the negative pressure generation member storage chamber 93.

The air communication port 97 is formed at a position in the cover member 96 corresponding to the negative pressure generation member storage chamber 93. A sealing member 98 is attached to the housing 91 in such a way as to cover the air communication port 97.

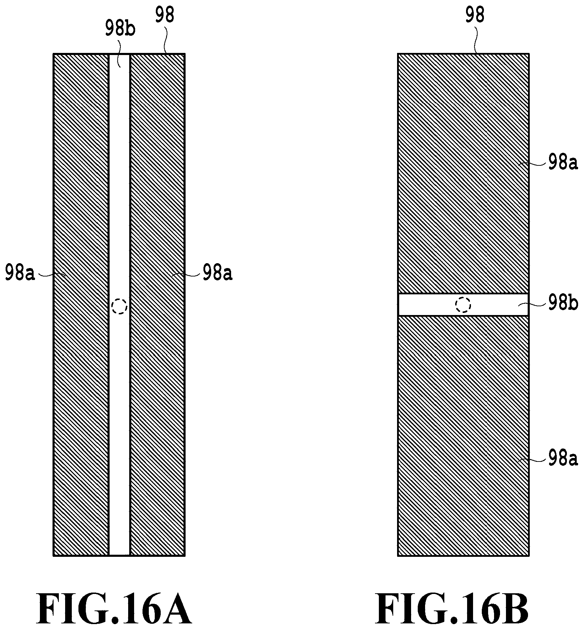

Figs. 16A and 16B are diagrams showing layout examples of an adherent region 98a and a non-adherent region 98b in the sealing member 98 of this embodiment. Fig. 16A shows an example in which the non-adherent region 98b extends in a long side direction of the sealing member 98, and Fig. 16B shows an example in which the non-adherent region 98b extends in a short side direction of the sealing member 98. In any case, the air communication port 97 is located at a position corresponding to the non-adherent region 98b of the sealing member 98 in the state where the sealing member 98 is attached to the cover member 96.

At the time of manufacturing the ink cartridge 90, the ink is injected into the liquid storage chamber 92 before attaching the sealing member 98 to the cover member 96, that is, in a state where the air communication port 97 is open. The injected ink passes through the communication unit 94 and also enters the negative pressure generation member storage chamber 93, and is then absorbed and held by the negative pressure generation member 93a. Thereafter, the ink cartridge 90 is finished by attaching the sealing member 98 to the cover member 96, and is put into distribution in that state. A user attaches the ink cartridge 90 to the carriage 101 of the inkjet printing apparatus 100 without peeling the sealing member 98 off the ink cartridge 90 (see Fig. 14).

In the course of distribution or in the case where the ink cartridge 90 is attached to the carriage but no ink is supplied from the ink cartridge 90 to the printing head, the negative pressure generation member storage chamber 93 is kept at the atmospheric pressure whereby the sealing member 98 remains flat and smooth. As a consequence, the sealing member 98 blocks the air communication port 97 and suppresses the evaporation of the ink from the air communication port 97.

On the other hand, in the case where the ink is supplied from the supply port 99 to the printing head, the negative pressure generation member storage chamber 93 is temporarily decompressed. While a portion of the non-adherent region 98b in the vicinity of the air communication port 97 is attracted to the air communication port 97, the remaining region of the non-adherent region 98b is embossed by the reactive force as with the first embodiment. As a consequence, the communication passage that establishes the communication of the air is formed between the non-adherent region 98b and the cover member 96, and the air enters the negative pressure generation member storage chamber 93 which is in the decompressed state.

The air entering the negative pressure generation member storage chamber 93 is guided to the liquid storage chamber 92 through the communication unit 94 as well as a not-illustrated groove formed in the partition plate 95, and is stored in an upper part in the liquid storage chamber 92. Meanwhile, the ink stored in the liquid storage chamber 92 is supplied to the negative pressure generation member storage chamber 93 through the communication unit 94. As described above, the gas and the liquid are smoothly exchanged between the negative pressure generation member storage chamber and the liquid storage chamber. Accordingly, even in the case where the ink is consumed by an ejecting operation of the printing head, the ink in an amount equivalent to the consumed amount can be supplied stably from the ink cartridge 90 to the printing head.

In other words, this embodiment can achieve the effect of suppressing the evaporation of the ink and the effect of stably supplying the ink at the same time by covering a partial region of the cover member 96 inclusive of the air communication port 97 with the sealing member 98 provided with the non-adherent region 98b.

The above-described embodiment explains the characteristic configuration of this disclosure by using the example of the ink cartridge for use in the inkjet printing apparatus. However, this disclosure is not limited only to the aforementioned configuration. The liquid to be stored in the cartridge is not limited to the liquid used for the purpose of printing. For instance, in a case of manufacturing a biochip, a case of manufacturing an electronic circuit by using a printing technique, or in a case of manufacturing a semiconductor substrate, it is possible to use a liquid that serves as a material for forming wiring. In any case, the configuration of this disclosure can be effectively functioned in a case where a liquid used for a specific application is stored in a cartridge and the liquid is gradually consumed from the inside of the cartridge.

## Claims

1. An ink cartridge (20, 90) comprising:
a housing (70) including an air communication port (70c) and configured to store a liquid inside; and
a sealing member (71) attached to the housing (70) in such a way as to cover the air communication port (70c), wherein
the sealing member (71) includes an adherent region (71a) attached to the housing (70) and a non-adherent region (71b) not attached to the housing (70), and
the non-adherent region (71b) extends to an end portion of the sealing member (71) and forms a communication passage which establishes communication between the air communication port (70c) and air,
**characterized in that**
the non-adherent region (71b) establishes communication between the air communication port (70c) and air in a case where the housing (70) is in a decompressed state and functions for regulating communication between the air communication port (70c) and air in a case of atmospheric pressure, wherein a state of communication and regulation between the air communication port (70c) and air is variable depending on a change of a pressure state in the ink cartridge (20, 90).

2. The ink cartridge (20) according to claim 1 wherein
in a case where the ink cartridge (20) supplies the liquid, the non-adherent region (71b) establishes the communication passage by being deformed along with decompression of the inside of the ink cartridge (20), and
in a case where the ink cartridge (20) does not supply the liquid, the non-adherent region (71b) is not deformed.

3. The ink cartridge (20) according to claim 1 or 2 wherein
the air communication port (70c) is provided at a concave portion (70b) formed in the housing (70), and
the sealing member (71) is attached to the housing (70) in such a way as to entirely cover the concave portion (70b).

4. The ink cartridge (20) according to claim 1 or 2 wherein
the air communication port (70c) is provided on a flat and smooth surface of the housing (70), and
the sealing member (71) is attached to the housing (70) such that the non-adherent region (71b) is opposed to the air communication port (70c).

5. The ink cartridge (20) according to any one of claims 1 to 4 further comprising an inner bag (77) located inside the housing (70) and configured to store the liquid.

6. The ink cartridge (90) according to any one of claims 1 to 4 wherein
the housing (91) includes
a liquid storage chamber (92) configured to store the liquid, and
a negative pressure generation member storage chamber (93) configured to hold the liquid supplied from the liquid storage chamber (92) by using a negative pressure generation member (93a), and
the air communication port (97) is provided in the negative pressure generation member storage chamber (93).

7. The ink cartridge (20, 90) according to any one of claims 1 to 6 wherein
the non-adherent region (71b, 98b) has a width not smaller than 0.1 mm and not larger than 15.0 mm in a direction crossing a direction of its extension.

8. The ink cartridge (20, 90) according to any one of claims 1 to 6 wherein
the non-adherent region (71b, 98b) has a width not smaller than 1.0 mm and not larger than 12.0 mm in a direction crossing a direction of its extension.

9. The ink cartridge (20, 90) according to any one of claims 1 to 8 wherein
the non-adherent region (71b, 98b) extends from a central part to the end portion of the sealing member (71, 98).

10. The ink cartridge (20, 90) according to any one of claims 1 to 9 wherein
the adherent region (71a, 98a) is a region provided with an adhesive agent, and
the non-adherent region (71b, 98b) is a region not provided with the adhesive agent.

11. The ink cartridge (20, 90) according to any one of claims 1 to 9 wherein
the adherent region (71a, 98a) is a region provided with an adhesive agent, and
the non-adherent region (71b, 98b) is a region in which a thickness of the adhesive agent is a relatively smaller than a thickness of the adhesive agent in the adherent region (71a, 98a).

12. The ink cartridge (20, 90) according to any one of claims 1 to 11, wherein, as viewed along the extension direction of the non-adherent region (71b) towards the end portion of the sealing member (71), the non-adherent region (71b) and the adherent region (71a) are arranged such that the adherent region (71a) contacts side end surfaces of the non-adherent region (71b).

## Patentansprüche

1. Tintenkartusche (20, 90), die Folgendes aufweist:
ein Gehäuse (70), das einen Luftverbindungsanschluss (70c) aufweist und gestaltet ist, um eine Flüssigkeit darin zu speichern; und
ein Dichtungsbauteil (71), das an dem Gehäuse (70) in einer derartigen Weise angebracht ist, um den Luftverbindungsanschluss (70c) abzudecken, wobei
das Dichtungsbauteil (71) eine haftende Region (71a), die an dem Gehäuse (70) angebracht ist, und eine nicht haftende Region (71b) aufweist, die nicht an dem Gehäuse (70) angebracht ist, und
sich die nicht haftende Region (71b) zu einem Endabschnitt des Dichtungsbauteils (71) erstreckt und einen Verbindungsdurchgang ausbildet, der eine Verbindung zwischen dem Luftverbindungsanschluss (70c) und einer Luft herstellt,
**dadurch gekennzeichnet, dass**
die nicht haftende Region (71b) eine Verbindung zwischen dem Luftverbindungsanschluss (70c) und der Luft in einem Fall herstellt, in dem sich das Gehäuse (70) in einem dekomprimierten Zustand befindet, und zum Regulieren der Verbindung zwischen dem Luftverbindungsanschluss (70c) und der Luft in einem Fall von Atmosphärendruck funktioniert, wobei ein Zustand der Verbindung und Regulierung zwischen dem Luftverbindungsanschluss (70c) und der Luft abhängig von einer Änderung eines Druckzustands in der Tintenkartusche (20, 90) variabel ist.

2. Tintenkartusche (20) nach Anspruch 1, wobei
in einem Fall, in dem die Tintenkartusche (20) die Flüssigkeit zuführt, die nicht haftende Region (71b) den Verbindungsdurchgang herstellt, indem sie zusammen mit einer Dekompression des Inneren der Tintenkartusche (20) verformt wird, und
in einem Fall, in dem die Tintenkartusche (20) die Flüssigkeit nicht zuführt, die nicht haftende Region (71b) nicht verformt wird.

3. Tintenkartusche (20) nach Anspruch 1 oder 2, wobei
der Luftverbindungsanschluss (70c) an einem konkaven Abschnitt (70b) vorgesehen ist, der in dem Gehäuse (70) ausgebildet ist, und
das Dichtungsbauteil (71) an dem Gehäuse (70) in einer derartigen Weise angebracht ist, um den konkaven Abschnitt (70b) vollständig abzudecken.

4. Tintenkartusche (20) nach Anspruch 1 oder 2, wobei
der Luftverbindungsanschluss (70c) an einer flachen und glatten Fläche des Gehäuses (70) vorgesehen ist, und
das Dichtungsbauteil (71) an dem Gehäuse (70) derart angebracht ist, dass die nicht haftende Region (71b) zu dem Luftverbindungsanschluss (70c) gegenüberliegt.

5. Tintenkartusche (20) nach einem der Ansprüche 1 bis 4, die des Weiteren einen Innenbeutel (77) aufweist, der innerhalb des Gehäuses (70) angeordnet und gestaltet ist, um die Flüssigkeit zu speichern.

6. Tintenkartusche (90) nach einem der Ansprüche 1 bis 4, wobei das Gehäuse (91) Folgendes aufweist:
eine Flüssigkeitsspeicherkammer (92), die gestaltet ist, um die Flüssigkeit zu speichern, und
eine Unterdruckerzeugungsbauteilspeicherkammer (93), die gestaltet ist, um die von der Flüssigkeitsspeicherkammer (92) durch Verwendung eines Unterdruckerzeugungsbauteils (93a) zugeführte Flüssigkeit zu halten, und
der Luftverbindungsanschluss (97) in der Unterdruckerzeugungsbauteilspeicherkammer (93) vorgesehen ist.

7. Tintenkartusche (20, 90) nach einem der Ansprüche 1 bis 6, wobei
die nicht haftende Region (71b, 98b) eine Breite von nicht kleiner als 0,1 mm und nicht größer als 15,0 mm in einer Richtung hat, die eine Richtung ihrer Erstreckung kreuzt.

8. Tintenkartusche (20, 90) nach einem der Ansprüche 1 bis 6, wobei
die nicht haftende Region (71b, 98b) eine Breite von nicht kleiner als 1,0 mm und nicht größer als 12,0 mm in einer Richtung hat, die eine Richtung ihrer Erstreckung kreuzt.

9. Tintenkartusche (20, 90) nach einem der Ansprüche 1 bis 8, wobei
sich die nicht haftende Region (71b, 98b) von einem zentralen Teil zu dem Endabschnitt des Dichtungsbauteils (71, 98) erstreckt.

10. Tintenkartusche (20, 90) nach einem der Ansprüche 1 bis 9, wobei
die haftende Region (71a, 98a) eine mit einem Haftmittel vorgesehene Region ist, und
die nicht haftende Region (71b, 98b) eine Region ist, die nicht mit dem Haftmittel vorgesehen ist.

11. Tintenkartusche (20, 90) nach einem der Ansprüche 1 bis 9, wobei
die haftende Region (71a, 98a) eine mit einem Haftmittel vorgesehene Region ist, und
die nicht haftende Region (71b, 98b) eine Region ist, in der eine Dicke des Haftmittels relativ kleiner ist als eine Dicke des Haftmittels in der haftenden Region (71a, 98a).

12. Tintenkartusche (20, 90) nach einem der Ansprüche 1 bis 11, wobei die nicht haftende Region (71b) und die haftende Region (71a) aus Sicht entlang der Erstreckungsrichtung der nicht haftenden Region (71b) in Richtung des Endabschnitts des Dichtungsbauteils (71) derart angeordnet sind, dass die haftende Region (71a) seitliche Endabschnitte der nicht haftenden Region (71b) berührt.

## Revendications

1. Cartouche d'encre (20, 90), comprenant :
un boîtier (70) comprenant un orifice de communication avec l'atmosphère (70c) et configuré pour y contenir un liquide ; et
un élément d'étanchéité (71) fixé au boîtier (70) de façon à recouvrir l'orifice de communication avec l'atmosphère (70c), dans laquelle
l'élément d'étanchéité (71) comprend une région adhérente (71a) fixée au boîtier (70) et une région non adhérente (71b) non fixée au boîtier (70), et
la région non adhérente (71b) s'étend jusqu'à une partie d'extrémité de l'élément d'étanchéité (71) et forme un passage de communication qui établit une communication entre l'orifice de communication avec l'atmosphère (70c) et l'atmosphère,
**caractérisée en ce que**
la région non adhérente (71b) établit une communication entre l'orifice de communication avec l'atmosphère (70c) et l'atmosphère dans un cas dans lequel le boîtier (70) est dans un état décompressé et sert à réguler une communication entre l'orifice de communication avec l'atmosphère (70c) et l'atmosphère dans un cas de pression atmosphérique, dans laquelle un état de communication et de régulation entre l'orifice de communication avec l'atmosphère (70c) et l'atmosphère est variable en fonction d'un changement d'un état de pression dans la cartouche d'encre (20, 90).

2. Cartouche d'encre (20) selon la revendication 1, dans laquelle
dans un cas dans lequel la cartouche d'encre (20) assure une alimentation en le liquide, la région non adhérente (71b) établit le passage de communication en étant déformée conjointement avec une décompression de l'intérieur de la cartouche d'encre (20), et
dans un cas dans lequel la cartouche d'encre (20) n'assure pas d'alimentation en le liquide, la région non adhérente (71b) n'est pas déformée.

3. Cartouche d'encre (20) selon la revendication 1 ou 2, dans laquelle
l'orifice de communication avec l'atmosphère (70c) est disposé au niveau d'une partie concave (70b) formée dans le boîtier (70), et
l'élément d'étanchéité (71) est fixé au boîtier (70) de façon à recouvrir complètement la partie concave (70b).

4. Cartouche d'encre (20) selon la revendication 1 ou 2, dans laquelle
l'orifice de communication avec l'atmosphère (70c) est disposé sur une surface plate et lisse du boîtier (70), et
l'élément d'étanchéité (71) est fixé au boîtier (70) de sorte que la région non adhérente (71b) fasse face à l'orifice de communication avec l'atmosphère (70c).

5. Cartouche d'encre (20) selon l'une quelconque des revendications 1 à 4, comprenant en outre un sac intérieur (77) situé à l'intérieur du boîtier (70) et configuré pour contenir le liquide.

6. Cartouche d'encre (90) selon l'une quelconque des revendications 1 à 4, dans laquelle
le boîtier (91) comprend
une chambre de contenance de liquide (92) configurée pour contenir le liquide, et
une chambre de contenance d'élément de génération de dépression (93) configuré pour maintenir le liquide alimenté depuis la chambre de contenance de liquide (92) au moyen d'un élément de génération de dépression (93a), et
l'orifice de communication avec l'atmosphère (97) est disposé dans la chambre de contenance d'élément de génération de dépression (93).

7. Cartouche d'encre (20, 90) selon l'une quelconque des revendications 1 à 6, dans laquelle
la région non adhérente (71b, 98b) a une largeur supérieure ou égale à 0,1 mm et inférieure ou égale à 15,0 mm dans une direction coupant sa direction d'étendue.

8. Cartouche d'encre (20, 90) selon l'une quelconque des revendications 1 à 6, dans laquelle
la région non adhérente (71b, 98b) a une largeur supérieure ou égale à 1,0 mm et inférieure ou égale à 12,0 mm dans une direction coupant sa direction d'étendue.

9. Cartouche d'encre (20, 90) selon l'une quelconque des revendications 1 à 8, dans laquelle
la région non adhérente (71b, 98b) s'étend d'une partie centrale à la partie d'extrémité de l'élément d'étanchéité (71, 98).

10. Cartouche d'encre (20, 90) selon l'une quelconque des revendications 1 à 9, dans laquelle
la région adhérente (71a, 98a) est une région dotée d'un agent adhésif, et
la région non adhérente (71b, 98b) est une région non dotée de l'agent adhésif.

11. Cartouche d'encre (20, 90) selon l'une quelconque des revendications 1 à 9, dans laquelle
la région adhérente (71a, 98a) est une région dotée d'un agent adhésif, et
la région non adhérente (71b, 98b) est une région dans laquelle une épaisseur de l'agent adhésif est relativement inférieure à une épaisseur de l'agent adhésif dans la région adhérente (71a, 98a).

12. Cartouche d'encre (20, 90) selon l'une quelconque des revendications 1 à 11, dans laquelle, observées dans la direction d'étendue de la région non adhérente (71b) en direction de la partie d'extrémité de l'élément d'étanchéité (71), la région non adhérente (71b) et la région adhérente (71a) sont disposées de sorte que la région adhérente (71a) contacte des surfaces d'extrémité latérale de la région non adhérente (71b).
